(19) Europäisches Patentamt

European Patent Office

Office européen des brevets

(11) **EP 3 224 941 B1**

(12) **EUROPEAN PATENT SPECIFICATION**

(45) Date of publication and mention of the grant of the patent:
**13.01.2021 Bulletin 2021/02**

(21) Application number: **15862627.5**

(22) Date of filing: **23.11.2015**

(51) Int Cl.:
*H02P 3/14* (2006.01)          *B27B 5/29* (2006.01)
*H02P 7/298* (2016.01)          *H02P 3/24* (2006.01)

(86) International application number:
**PCT/US2015/062162**

(87) International publication number:
**WO 2016/085862 (02.06.2016 Gazette 2016/22)**

(54) **MOTOR BRAKING SYSTEM AND METHOD FOR POWER TOOLS**

MOTORBREMSSYSTEM UND VERFAHREN FÜR ELEKTROWERKZEUGE

SYSTÈME ET PROCÉDÉ DE FREINAGE DE MOTEUR POUR OUTILS ÉLECTRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2014 US 201462083364 P**

(43) Date of publication of application:
**04.10.2017 Bulletin 2017/40**

(73) Proprietor: **Robert Bosch GmbH**
**70442 Stuttgart (DE)**

(72) Inventors:
• **ASSALIYSKI, Marin**
  **Chicago, IL 60625 (US)**
• **KOEGEL, Jan**
  **72250 Freudenstadt (DE)**

(56) References cited:
**EP-A2- 1 411 626          EP-A2- 2 509 212**
**WO-A1-97/29539          WO-A2-2010/105903**
**DE-A1- 3 539 841          JP-A- S6 464 572**
**JP-A- 2000 270 577          KR-A- 20000 009 227**
**US-A- 4 833 386          US-A- 5 294 874**
**US-B1- 7 248 008**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Background

The present disclosure relates to power tools, such as table saws, and more particularly to motor braking systems for electric motors powering such tools. This description focuses on a table saw application, but it is understood that the principles disclosed herein are applicable to other types of power tools.

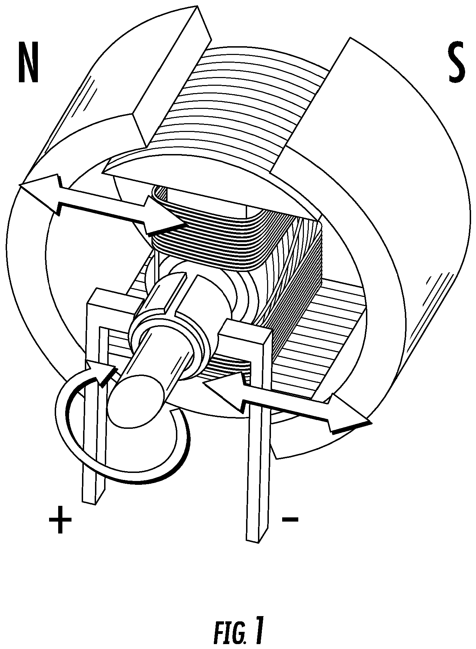

FIG. 1 shows a simple DC motor with two poles in which repulsion/attraction between the poles on the stationary field and the poles on the rotating armature causes the rotation of the armature. In a universal (series) motor the magnetic fields are created by windings on the field and on the armature using alternating current (AC) rather than DC. The AC motor still works nearly identical to the DC motor because even though the current/voltage alternates, it does so in the field and in the armature equally. This means that although the poles on the windings will change direction during every cycle of the AC power, the motor will continue to produce torque in the same direction. During the rotation, the commutator of the motor has the task of switching the windings such that the winding at the proper location is energized to give repulsion/attraction forces necessary.

The major concepts involved in the operation of an AC motor are the Lorentz Force Law, Ampere's Force Law, Biot-Savart Law, and Faraday's Law of Induction. The Lorentz and Ampere's laws combine to give the relation below:

$$F = q \left( E + v \times B \right)$$

This resulting force is the force generated on a point charge q, which is in an electric field E and a magnetic field B moving at a velocity v. This equation applies to each individual electron within a current carrying wire. Faraday's Law of Induction pulls the different concepts together and provides the ability to predict how magnetic and electric fields interact to produce an electromotive force (EMF). The Biot-Savart law describes how electric current passing through a conductor generates a magnetic field.

In power tools, the windings of the AC motor are segmented into windings that provide a driving force and windings that provide a braking force counter to the driving force. The drive windings are activated during normal operation of the motor, while the braking windings are activated when it is desired to slow or brake the rotation of the motor, and thus the power tool. In one table saw product the windings are configured as:

| Winding | # Turns Wire | Gauge |
|---------|--------------|-------|
| DRIVE field | 95 x 2 | 0.7 mm |
| BRAKE field | 180 | 0.35 mm |

The field strength for each field (DRIVE and BRAKE) depends on the number of turns of the particular winding and the wire diameter. In the present illustration, the DRIVE field has a combined (both poles) 190 turns compared to the 180 turns for the BRAKE field, and a wire diameter exactly double that of the brake winding. Thus, in the conventional motor, the field strength of the BRAKE field is less than the field strength of the DRIVE field. This disparity in field strength is sufficient for normal braking or slowing of a power tool. However, the BRAKE field strength of the exemplary table saw product is not sufficient to provide for emergency braking in which the motor and power tool must come to a stop within fractions of a second to reduce the risk of serious injury, such as amputation, to the operator. Many power tools incorporate mechanical braking systems that stop the rotation of the tool spindle in an emergency situation. Mechanical brakes add structure and weight to the power tool, which can be problematic for hand-held power tools. Moreover, mechanical brakes can increase the wear on the electric motor. Consequently, there is a need for an effective non-mechanical motor braking system.

EP 2509212 A2 discloses a drive device including a pair of drive switches, a first diode, a switching element, a current detection unit, a capacitor, a second diode, and a current control unit. The first diode, the switching element, and the current detection unit are arranged, in this order from one end of an armature in a motor, on a braking current path that is formed of the armature and a field winding in the motor when the pair of drive switches is in a brake position. The second diode is adapted to keep allowing a braking current to flow through the field winding when the switching element is in an off-state by directly connecting a partial path between the switching element and the current detection unit on the braking current path and the other end of the armature.

Summary

The present disclosure contemplates, a conventional universal (series wound) motor configured for use as a brake in normal winding down situations as well as emergency stopping situations. In one aspect, electronics and controls are used to regulate the appropriate level of braking for the particular situation. Emphasis is placed on a system which causes minimal wear and tear on the various components of the tool while used as a brake. The present disclosure thus contemplates an electronic braking concept which adds no external mechanical braking components and takes advantage of the motor's operating principles.

The present invention provides a braking system for a universal motor having the features of claim 1 and a method for braking a universal motor having the features of claim 10. The motor may include brake windings, in which case a second energy storage device is connected across the brake windings and the controller is configured to connect the brake windings to the second storage device in the braking mode. In accordance with this feature of the present disclosure, combining the brake and drive windings results in magnetic fields that complement each other and that provides a significant increase in the magnetic field over just the brake windings themselves. It should be noted that regardless of the magnetic field strength, the braking torque will depend on the speed of rotation of the armature, so that the braking force tapers off as the armature slows down thus attenuating the braking effect at low speeds.

Description of the Figures

FIG. 1 is a depiction of an electric motor such as for use in a power tool.

FIG. 2 is a wiring diagram of a conventional motor circuit for an electric motor such as for use in a power tool.

FIG. 3 is a schematic of the physical layout of the conventional motor circuit of FIG. 2.

FIG. 4 is a circuit diagram of a motor drive circuit according to one aspect of the present invention incorporating capacitor banks in series with field and armature windings of the motor.

FIG. 5 is a graph of mains supply current and voltage and capacitor charging timing in accordance with one aspect of the present disclosure.

FIG. 6 is a top view of a switching board used in the motor drive circuit of FIG. 4.

FIG. 7 is a circuit diagram of a switching circuit according to a further aspect of the present invention for use in the motor drive circuit shown in FIG. 4

FIG. 8 is a circuit diagram of the switching circuit shown in FIG. 7 depicting a RUN mode of operation of the motor.

FIG. 9 is a circuit diagram of the switching circuit shown in FIG. 7 depicting a BRAKE mode of operation of the motor.

FIG. 10 is a circuit diagram of a switching circuit according to another aspect of the present invention for use in the motor drive circuit shown in FIG. 4

FIG. 11 is a circuit diagram of the switching circuit shown in FIG. 10 depicting a RUN mode of operation of the motor.

FIG. 12 is a circuit diagram of the switching circuit shown in FIG. 10 depicting a BRAKE mode of operation of the motor.

Detailed Description

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles disclosed herein as would normally occur to one skilled in the art to which this disclosure pertains.

According to the present disclosure, a conventional universal (series wound) motor is configured for use as a brake in normal winding down situations as well as in emergency stopping situations. A system is provided which causes minimal wear and tear on the various components of the tool while used as a brake. The present disclosure thus contemplates an electronic braking concept which adds no external mechanical braking components and takes advantage of the motor's operating principles. The braking systems disclosed herein can be used as a normal tool spin down brake, as well as an emergency brake in safety hazard situation. Due to the use of advanced control and feedback the brake will have minimal impact on the lifetime of motor and driveline components.

In accordance with one feature of the present disclosure, the brake and drive windings are provided in an arrangement that results in magnetic fields that complement each other. This feature results in a significant increase in the magnetic field over just the brake windings of the conventional motor. In one aspect, the system disclosed herein is capable of doubling the strength of the braking magnetic field with some losses. This increase in braking field in effect doubles the braking torque available which substantially decreases the braking time to levels sufficient for emergency non-mechanical braking of the motor and power tool. It should be noted that regardless of the magnetic field strength, the braking torque will depend on the speed of rotation of the armature, or in other words how often the opposing poles move past each other. This means that although the braking torque may double in accordance with the present disclosure, this braking torque will taper off as the armature slows down thus attenuating the braking effect at low speeds.

In one aspect of the present disclosure, the motor control circuit is configured to maintain a significant current through the field and armature windings for an appropriate amount of time after power has been disconnected and emergency braking is needed. In one aspect, capacitors are integrated into the motor circuit which will be charged during normal motor running operation. When braking is needed the capacitors are re-connected such that they discharge appropriately across the field and the armature windings of the motor. In one embodiment, the armature and field winding circuits are separated with each winding circuit including its own capacitor or capacitor bank. This approach ensures that the current flow can be independently controlled to optimize the braking effect while providing improved motor performance and brush life.

In accordance with the present disclosure charging, discharging, and circuit connection switching is controlled by a high speed processor which has the capability to sense the current and voltage of the winding circuits in a normal run mode. Such sensing may be modified in the braking mode in which the process can be controlled and tabulated. According to the present disclosure, the controller 15 has the ability to follow the current and voltage waveforms from the mains power supply and to direct the switching elements to act at the appropriate times depending on the situation. For example, phases of interest for switching may be at either positive or negative peaks, or at zero-crossings of the voltage and/or the current.

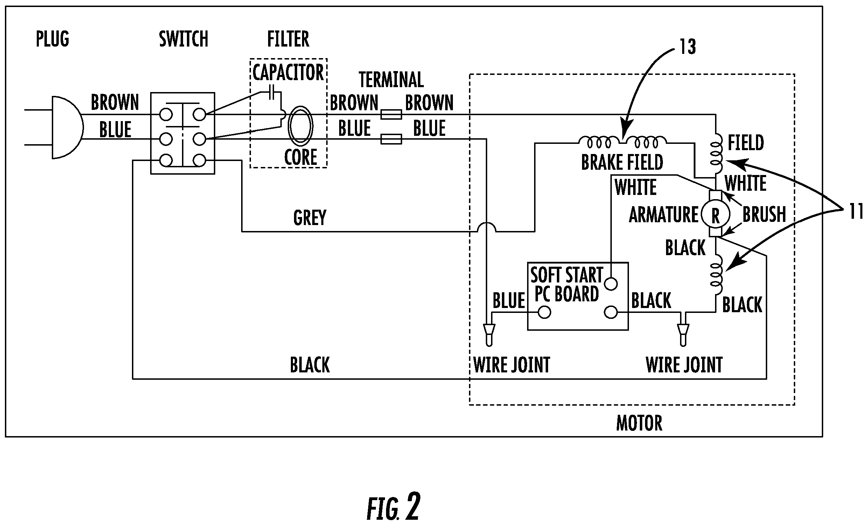

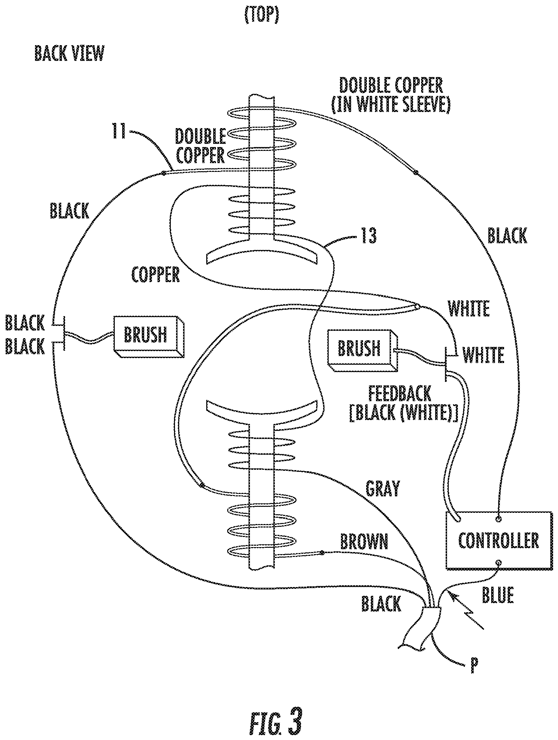

FIG. 2 shows a wiring diagram for a conventional motor for a power tool such as a table saw. In the conventional motor control circuitry, the windings and armature are connected along with the controller and power supply. FIG. 3 shows the same motor and control arrangement represented in a more physically accurate manner. The armature is not shown but all other components are true as well as winding directions and physical relations between the components. It can be noted from FIG. 3 that the physical winding directions (clockwise vs. counter-clockwise) of the RUN winding and the BRAKE winding are opposite to each other. It can also be noted from this figure that the armature is in series during run and brake modes. However alternative braking methods can be used in which the armature is taken out of the loop and in some cases shorted with itself.

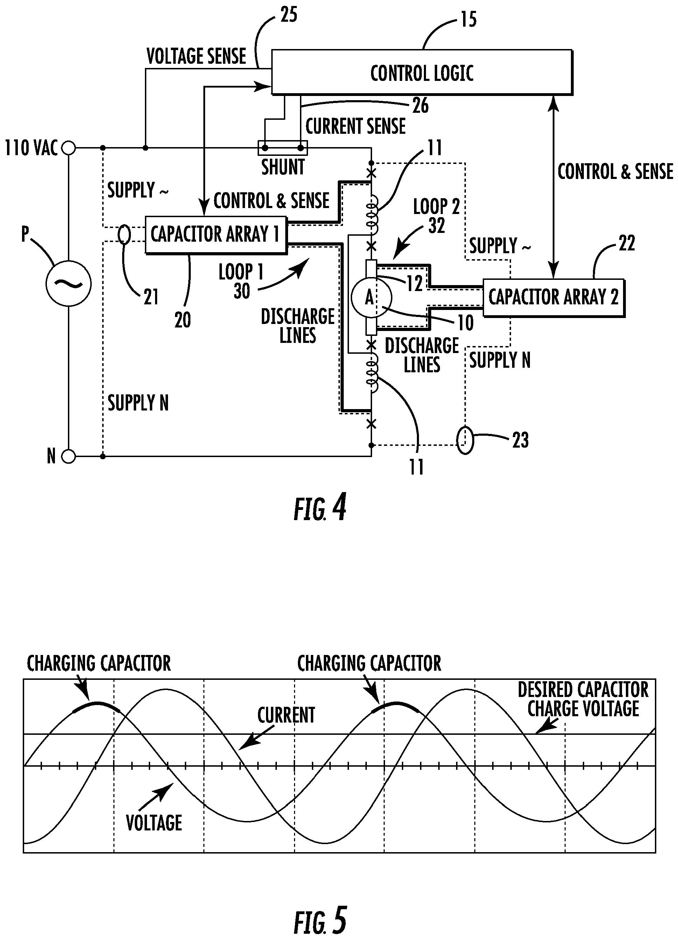

The motor control circuitry according to the present disclosure incorporates some modifications and additions to the conventional motor wiring shown in FIG. 3. These modifications include power rectification for control logic power, an energy storage device which may be in the form of capacitors, components for sensing voltage and current phases, and switching components to perform the re-configuration of the motor from run mode to brake mode. FIG. 4 shows a schematic for certain modifications according to one aspect of the present disclosure.

The motor 10 includes field windings 11 as in the conventional motor shown in FIGS. 2-3. A controller 15 is incorporated into the control circuit which may be powered from the AC mains power supply 14 by way of power rectification. This can be accomplished by a simple implementation of diodes (or a diode bridge), a voltage divider from resistors, and capacitors for conditioning the voltage output, any of which offers a highly effective and extremely cost effective implementation. It should be noted that by use of this implementation there will be no galvanic isolation between the powered components in the tool and the mains power supply. In this embodiment, the current supply is direct from the mains power P to the electronic circuitry so that additional components may be incorporated to limit the power supplied to the controller 15 in the case of electrical faults.

As an alternative to direct connection to the mains power supply P, the controller 15 may be powered through energy storage which can be a more effective and cost reducing implementation as opposed to high current rectification from the mains power supply. Thus, in accordance with one aspect, two energy storage devices 20, 22 are connected across the mains power supply P by corresponding power lines 21, 23, and are selectively connected to and disconnected from the external power supply by the controller 15. This controller is configured to maintain the mains connection until the storage devices 20, 22 are charged to the appropriate level. Capacitors are useful as the energy storage devices 20, 22 because they can be charged quickly and discharged at very high rates. Since there is no need for long term energy storage (as in a battery) there is no issue if the capacitors discharge over time. The controller 15 can be configured to monitor the charge status of the energy storage devices 20, 22 and to connect the capacitors to the mains power supply as needed.

Phase sensing of the voltage and current waveforms from the mains power supply are required for properly charging the capacitors as well as for choosing an appropriate time for the switching procedure to be initiated. Phase sensing can be accomplished by use of passive electronics and analog to digital conversion (ADC) capabilities incorporated into the controller 15 or by use of commercial sensor which can interface to the controller.

Run Mode

In accordance with one aspect of the system disclosed herein, the controller 15 operates in the run mode of the electric motor (i.e., the mode in which the tool is under normal use) to switch the capacitors in and out of the circuit at the appropriate intervals in order to allow them to become appropriately charged. Once the capacitors are fully charged, they are not connected to the circuit until their charge dissipates or the capacitor is used in a braking operation. FIG. 5 shows an example embodiment of this approach. The capacitors are switched out of the circuit at all points except as depicted by the heavy line at the voltage wave peaks. The phase of charging can be adjusted and does not necessarily have to include only the peaks. The only requirement is that the voltage at the time the capacitor is in circuit is higher than the desired charge level (indicated by the horizontal line in FIG. 5), such that the capacitor continues charging and does not discharge.

At the end of the run mode, i.e. at the end of a cutting operation, the tool can progress into one of two expected states. One state is normal power off such as through the use of the power off switch. In this case the capacitors are not discharged and are kept disconnected from the circuit. In case of safety concerns, the controller 15 can be configured to discharge the capacitors even after a normal shut off, to avoid potential safety issues during storage and transportation due to the charged capacitors. Alternatively or in any combination, the charge in the capacitors can be used as a nonemergency brake as well, by discharging them at a slow rate such that enough braking torque is produced as is required to stop the blade in some extended (relative to an emergency brake) amount of time.

Transition Mode

The motor control circuitry and controller of the present disclosure is configured to provide second state of operation in which emergency braking is needed. The emergency braking mode can be triggered by a tool operator, such as by activating a kill switch, or automatically by detection of a potentially hazardous event, such as the user's proximity to the working tool or a tool backlash event. A signal may thus be provided to the controller **15** indicative of an emergency event, whether the signal is from a kill switch or from a condition sensor configured to detect the potential hazard. When the emergency brake function is triggered a sequence of events follows in order to transition or switch to the brake mode. This sequence of events transitions or switches the active lines of the motor circuitry in two ways. The first transition is from external power to stored power from the capacitor banks **20, 22.** The second transition determines which windings of the universal motor are activated or provided with power. An additional switch or transition can be considered to be in the direction of torque force applied by the activated windings to the motor armature so that the newly applied torque opposes the current direction of rotation of the motor in order to achieve braking.

As explained above, the controller of the system disclosed herein ensures that the capacitors are fully charged and are able to supply the necessary energy for the motor braking process. Thus, entry into the transition phase from normal run mode to emergency braking mode the system has the following characteristics:

- The capacitors are fully charged and disconnected from supply lines
- The motor is still connected to mains power supply
- The controller knows the current phase of the voltage and current from the mains supply lines to the motor.

The controller **15** can incorporate a voltage sensor **25** and a current sensor **26** capable of sensing the mains current, voltage and phase, as shown in **FIG. 4.**

Having the phases of the voltage and current the controller **15** will determine whether the controller can initiate the circuit switching procedure immediately, or whether the switching process must be delayed for a better point in the phases in order to limit the wear on the electrical components in the system. An optimal point may be at the zero-crossing of the current waveform. At this point since the current is zero there is a minimal amount of energy stored in the windings, which may otherwise cause switching problems in the sense of excessive wear on components. Other determinations are possible as discussed below.

As the switching is happening, the mains power supply is disconnected. The armature is also disconnected from the rest of the circuit and is shorted with itself with the capacitors in series. The same is done with the field winding connections, such that the field windings **11** are also shorted with themselves with the capacitors **20, 22** in series. At the end of the switching cycle two distinct loops are produced in the wiring circuitry. The first loop **30** includes the field windings **11** in series with the capacitors **20,** and the second loop **32** includes the armature windings **12** in series (through the commutator and brushes) with the second bank of capacitors **22.** In a braking mode it is desirable to switch the polarity on either the field windings **11** or the armature windings **12** in order to reverse the direction of the generated torque. The choice of which polarity to switch will not have an effect on the performance so it may be chosen such that it is more practical.

Switching components are necessary to bring the motor wiring from a normal run configuration into one that is more suitable for braking. Constraints in the selection of the switching components include the limited amount of time available for switching and the alternating current (AC) application. Due to these constraints mechanical relays are not desirable. Instead, the use of MOSFETs, IGBTs, TRIACs and other high-speed components are more desirable. In one aspect of the present disclosure, TRIACs are used as the re-wiring switching elements because they offer cost effectiveness, switching times on the order of a couple of several milliseconds, and compatibility with AC circuits.

Current injection and control components for the present system need to have a very low response time as well as the ability to accurately control current flow. During the braking phase, only DC power is involved, therefore that constraint does not exist here. For optimal performance, MOSFETs and IGBTs are the best fit. MOSFETs may provide an additional advantage since they are voltage driven rather than current driven like IGBTs. This is beneficial since the MOSFETs will be controlled by the controller **15** which has a limited amount of current that it can source through its pins. This also removes the need for additional components to drive the gates of the current control components.

The switching electronics includes TRIACs with zero-crossing switching functionality, meaning that the TRIAC will switch off only at zero voltage crossing of the mains power waveform. If an alternative approach is utilized in which the switching occurs at other points in the AC cycle, as discussed above, the TRIACs can be replaced with versions which have random switching capability.

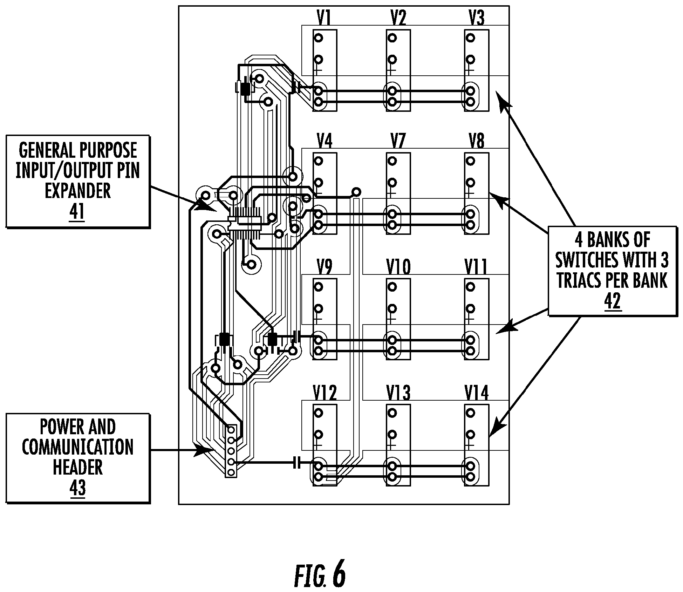

**FIG. 6** shows one implementation of a TRIAC switching board **40** that can be incorporated into the controller **15.** The major components of the board **40** include a Purpose Input and Output (GPIO) expander **41,** a number of banks of TRIACs **42,** and an interface header 43 that provides power and communication to the switching board. The operation of the switching board may be directly controlled by the GPIO expander **41** which may be in the form of an integrated circuit (IC) that allows the controller access to more pins, or for remote pins, needed for control and sensing. The controller **15** sends commands to the GPIO expander **41** over an I2C communication line through the power and communication header **43**. These commands are then executed by turning on specific pins to the TRIAC banks. This allows for a small processor with minimal footprint, while at the same time allowing for many extenders to be connected of a communication line. This in turn gives the ability to control multiple switching boards over a two wire communication line.

The illustrated embodiment the TRIAC bank **42** of the switching board **40** includes four different switching points (or banks) with each bank having up to three TRIACs as needed. One bank of TRIACs is provided for the field windings **11**, the armature windings **12**, the capacitor bank **20** and the capacitor bank **22** to control the connection of the corresponding component to the external power supply and to control the connection of the capacitor banks to the corresponding winding. Thus, one of the TRIAC banks **42** can be connected at the supply line **21** to the capacitor bank **20** to selectively connect and disconnect the capacitor bank from the supply. Similar connections can be made between the two windings **112, 12** and the second capacitor bank **22** and their respective power supply lines. This configuration accounts for the current flowing through each line to be switched being quite high, with inrush current being higher than 40 Amps in some cases. Using a bank of TRIACs **42** allows for the use of cheaper, low current, and inexpensive TRIACs as opposed to high current components which can be exponentially more expensive. An advantage is that only the required TRIACs need to be used, with one TRIAC per bank being suitable so long as the configuration can handle the current flow.

Emergency brake mode

At this point all the switching required has been completed and the motor circuit is set up such that the charge from the capacitors **20, 22** is discharged into the appropriate loop **30, 32** providing the current necessary to maintain a magnetic field in the motor field windings **11** and current through the armature windings **12** to interact with the created field. An external resistance may be incorporated into each loop such that energy dissipation occurs external to the windings as much as possible in order to minimize the heat build-up in the windings. It should be noted that during the braking process, the rotating armature will induce a back-EMF into the second loop **32** which may oppose the current being supplied by the capacitors in that loop. Therefore the capacitors and their charge level need to be such that they overcome the back-EMF and continue the braking process.

As the braking process begins, MOSFETs or IGBTs may be used to regulate the amount of current that flows through the loops **30, 32** which in turn controls the braking torque. The current regulators may be incorporated into the controller **15** or into the switching board **40**.

Once the current regulators begin to allow flow through the loops, the fields become energized with a constant magnetic field, as well as the armature segments connected through the commutator. Since the polarities of the fields are reversed, the generated continuous torque is now in the opposite direction relative to the normal mode rotation. This process continues until the blade stops. The controller **15** may be operable to continuously vary the braking torque generated through current control between the energy storage devices and the respective windings.

Alternative Capacitor Charging

As discussed above, in the run mode of operation for the power tool motor, the controller **15** switches the capacitors in and out of the circuit at appropriate times such that they charge until they reach an appropriate voltage. According to one aspect, the controller **15** or the capacitor banks **30, 32** can include transistors that have a pre-determined switching rate for charging the capacitors. This approach extends the lifetime of the capacitors due to having one charge and discharge cycle per tool power-on cycle.

In one alternative embodiment switching components are not required in the charging circuit of the capacitors. In this approach, the capacitors are connected to the supply voltage at all times and cycle continuously through charge-discharge cycles. In order to be able to use the energy of the capacitors as described above, the braking mode is only triggered at the phase of the cycle at which the capacitors are charged. With appropriately sized capacitors (capacitance and time constants) this opportunity arises once per mains power line cycle (which can be every 16 milliseconds for a 60Hz power line frequency). Using this approach provides a benefit of lower cost due to the fewer number of components required to implement the concept as well as a lower requirement on processing time. On the other hand, the lifetime of the capacitors may be shortened due to the continuous charge-discharge cycles which continue as long as the tool is on. Moreover, the ability to trigger the braking process is limited to only one point in the AC cycle as opposed to any point in time if the capacitors are maintained at full charge while the tool is on.

As described above, an optimum point in the AC cycle to perform the switching operation may be at the zero-crossing of the current waveform. This happens twice per cycle with the change in current vs. time being opposite every other half cycle. Which of the two cycles is chosen is not significant as long as it is compatible with the implementation of the capacitor circuits. Switching at the current zero-crossing is premised on the fact that at this point there is a no net flow of current (electrons) through the circuit, therefore there is no magnetic field stored in the field windings. This means that once the circuit is opened, the inductor will not try to overcome this by discharging itself. However, since the voltage prom of the motor control mains power is not zero, there may be some wear on certain electronic and motor components, as well as the induction of electromagnetic interference (EMI) into the power lines. As mentioned, this zero-crossing of the current is in fact the net current zero-crossing which includes counter-current caused by the back-EMF induced by the rotation of the conduction armature through the magnetic field of the field windings.

As an alternative the switching can be initiated at the zero voltage crossing. This may not be an optimal point to switch since there is current flow through the windings (inductors) which will generate a magnetic field. If the circuit is opened at this time the inductor will try to maintain the flow of current by discharging itself, which can be a quick discharge depending on the properties of the field winding. The benefit, however, is that since the voltage is zero there will be no potential (other than that caused by the discharging winding) in the circuit to cause issues with the electronic and motor components. In a further alternative switching can occur along any other phase of the current/voltage waveforms.

In the motor control circuit shown in **FIG. 4,** the field and armature windings are activated in both the run and braking modes. The field windings **11** may thus include the same number of windings as in the conventional motor shown in **FIGS. 3-4.** This number may be simply the number of field windings (190 in the specific example), or may include the combined number of field and brake windings (190 +180 in the specific example).

In a further aspect of the present disclosure, the motor circuit includes separate field and brake windings with both sets of windings controlled to permit emergency braking functions. According to this aspect of the disclosure, the electronic braking concept adds no external mechanical braking components and takes advantage of the built in BRAKE windings of a universal (series) motor. In this embodiment, the main DRIVE winding is converted to a secondary BRAKE winding through the use of high speed switches. In a further aspect, the magnetic field is actively manipulated to increase braking torque. It has been found that with high speed switching components the stopping time of a saw motor can be reduced by twelve percent.

The RUN and BRAKE windings of the motor circuit shown in **FIGS. 2-3** can modified in the manner shown in **FIG. 4.** In particular, the field windings **11** can be connected to the capacitor bank **20,** and the brake windings **13** can be connected to the capacitor bank **22** in lieu of the armature windings **12.** For this embodiment, the switching electronics can be the same as described above, namely TRIACs with zero-crossing switching functionality, and the switching board shown in **FIG. 6** may also be used.

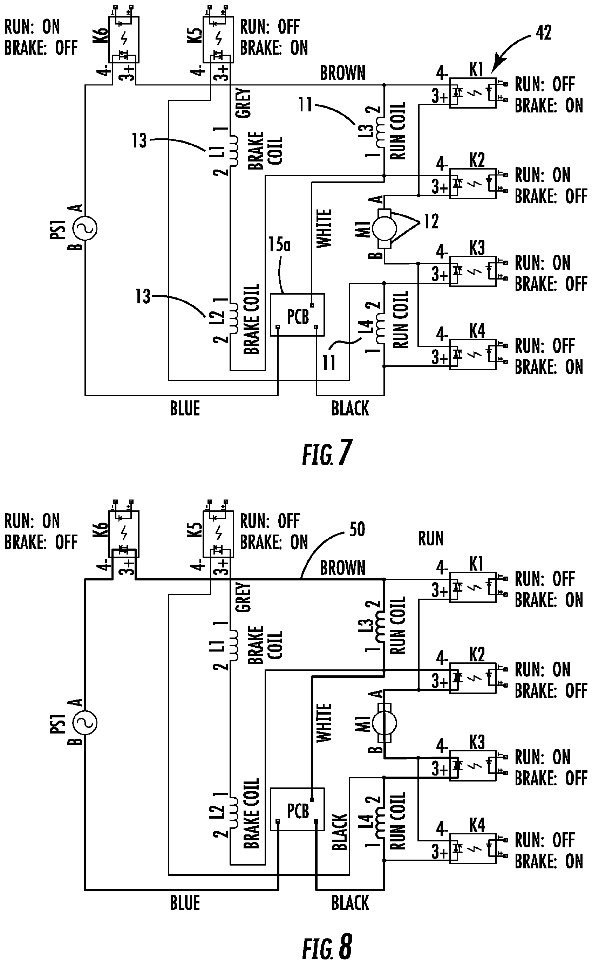

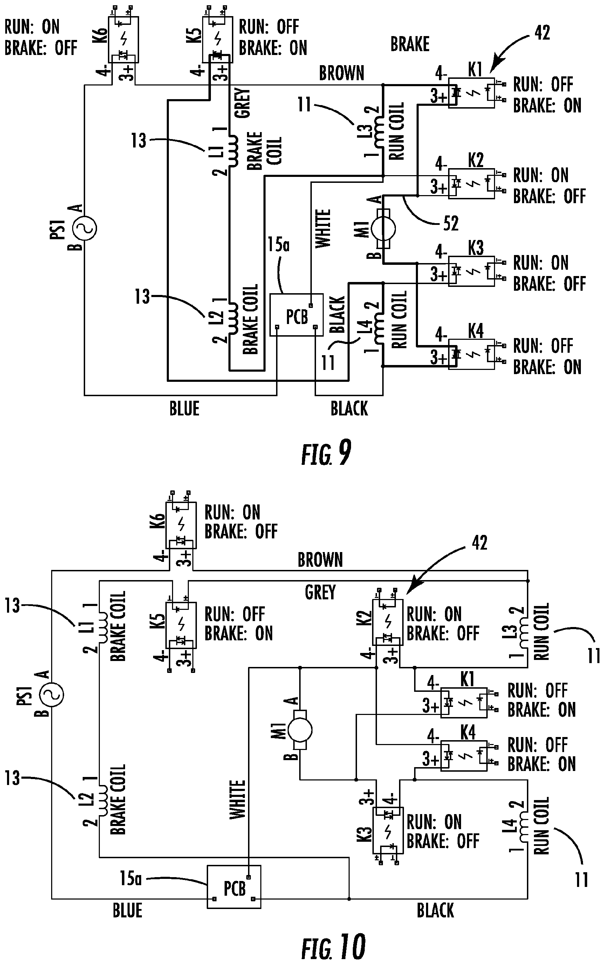

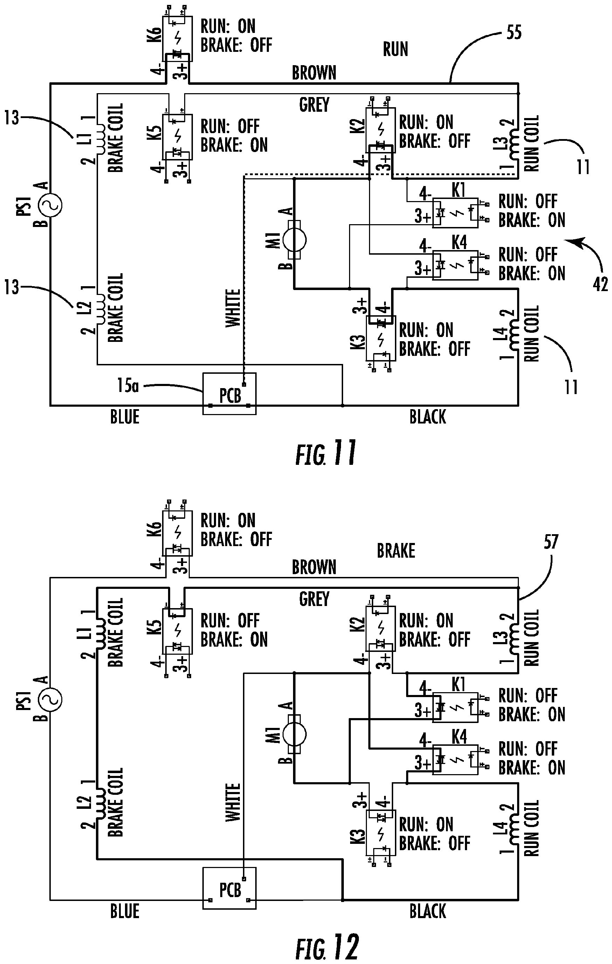

Alternative switching circuits are shown in **FIGS. 7-12,** with **FIGS. 8** and **11** showing the normal RUN modes for the circuits and **FIGS. 9** and **12** showing the BRAKE modes for the respective circuits. For instance, in the switching circuit shown in **FIG. 7,** the run mode is accomplished by deactivating TRIACs **K1, K4** and **K5** and activating TRIACs **K2, K3** and **K6** which activates the motor controller **15a** and energizes only the RUN windings **11** in the loop **50,** as depicted in **FIG. 8.** In the brake mode shown in **FIG. 9,** TRIACS **K2, K3** and **K6** are deactivated and TRIACs **K1, K4** and **K5** are activated which connects both the RUN windings **11** and the BRAKE windings **13** in the loop **52** to their respective capacitor banks **20, 22.** It can be noted that in the RUN mode, the motor controller **15a,** which is part of the overall circuit controller **15,** is active, but in the BRAKE mode the motor controller **15a** is inactive.

In the switching circuit shown in **FIG. 10,** a similar protocol is observed to energize either the RUN windings alone, or both the RUN and the BRAKE windings simultaneously. Thus, in the RUN mode shown in **FIG. 11,** the TRIACS **K1, K4** and **K6** are on and the TRIACS **K2, K3** and **K5** are off in loop. The TRIACs **K2, K3** and **K5** are on and TRIACs **K1, K4** and **K6** are off in the BRAKE mode loop **57** shown in **FIG. 12.** The TRIACs **K2, K3** and **K5** thus connect the field windings **11** and brake windings **13** to their respective capacitor banks **20, 22.** As with the prior embodiment, the motor controller **15a** is active in the RUN mode but not in the BRAKE mode. In each embodiment, only the field windings are activated in the RUN mode of operation of the motor. But in the BRAKE mode of operation, both the field windings **11** and the brake windings **13** are activated to provide the maximum braking torque for emergency braking. The controller **15** is connected to each of the TRIACs and is configured to turn the TRIACs off and on according to the protocols depicted in **FIGS. 7-12.**

## Claims

1. A braking system for a universal motor (10) having field windings (11), comprising:

    a motor control circuit connecting the field windings (11) to an external power supply;
    a storage device (20, 22) connected to the motor control circuit across the field windings (11); and
    a controller (15) operably coupled to the motor control circuit and configured in a braking mode to disconnect the field windings (11) from the external power supply and to connect the energy storage device (20, 22) to the field windings (11) to produce a braking torque in the motor (10), wherein the controller (15) is configured to selectively connect the energy storage device (20, 22) to the external power supply to charge the energy storage device (20, 22), wherein the energy storage device (20, 22) includes one or more capacitors, **characterized in that** the controller (15) is configured to:

    sense the phase of the voltage wave from the external power supply; and
    connect the one or more capacitors of the energy storage device (20, 22) to the external power supply only at the voltage wave peak.

2. The braking system according to claim 1, wherein the controller (15) is configured to selectively connect the energy storage device (20, 22) to the external power supply only in a run mode in which the field windings (11) are connected to the external power supply during normal operation of the motor (10).

3. The braking system according to claim 1, wherein:

    the controller (15) includes an array of switches including a first switch between the field windings (11) and the external power supply and a second switch between the energy storage device (20, 22) and the field windings (11); and
    the controller (15) is configured to activate the first switch and deactivate the second switch in a run mode during normal operation of the motor (10), and to deactivate the first switch and activate the second switch in the braking mode.

4. The braking system according to claim 3, wherein the array of switches are TRIACs (42).

5. The braking system according to claim 1, in which the motor (10) includes armature windings (12), the braking system further comprising a second energy storage device (22) connected across the armature windings (12), wherein the controller (15) is further configured to connect both the first energy storage device (20) and the second energy storage device (22) to the respective field windings (11) and armature windings (12) to produce a braking torque in the motor (10).

6. The braking system according to claim 1, in which the motor (10) includes brake windings, the braking system further comprising a second energy storage device (22) connected across the brake windings, wherein the controller (15) is further configured to connect both the first energy storage device (20) and the second energy storage device (22) to the respective field windings (11) and brake windings to produce a braking torque in the motor (10).

7. The braking system according to claim 6, wherein the energy storage devices (20, 22) each include one or more capacitors.

8. The braking system according to claim 6, wherein the controller (15) is configured to:

    connect only the field windings (11) to the external power supply in a run mode during normal operation of the motor (10); and
    in the brake mode, disconnect the field windings (11) from the external power supply and connect the field windings (11) and brake windings to a respective energy storage device (20, 22).

9. The braking system according to claim 1, wherein:

    the controller (15) includes a current sensor (26) for sensing the current waveform from the external power supply; and
    the controller (15) is configured to disconnect the field windings (11) and connect the energy storage device (20, 22) to the field windings (11) at a zero crossing of the current waveform.

10. A method for braking a universal motor (10) having field windings (11) and brake windings supplied by an external power supply, comprising:

    disconnecting the field windings (11) from the external power supply; and
    connecting both the field windings (11) and the brake windings to an energy storage device (20, 22), wherein a controller (15) selectively connects an energy storage device (20, 22) to the external power supply to charge the energy storage device (20, 22), wherein the energy storage device (20, 22) includes one or more capacitors, **characterized in that** the controller (15) senses the phase of the voltage wave from the external power supply; and
    connects the one or more capacitors of the energy storage device (20, 22) to the external power supply only at the voltage wave peak.

11. The method of claim 10, further comprising:

    monitoring the current waveform of the external power supply; and
    connecting both the field windings (11) and the brake windings to the energy storage device (20, 22) at a zero crossing of the current waveform.

**Patentansprüche**

1. Bremssystem für einen Universalmotor (10) mit Feldwicklungen (11), umfassend:

eine Motorsteuerschaltung, die die Feldwicklungen (11) mit einer externen Stromversorgung verbindet;

eine Speichervorrichtung (20, 22), die mit der Motorsteuerschaltung über die Feldwicklungen (11) verbunden ist; und

eine Steuervorrichtung (15), die betriebsfähig mit der Motorsteuerschaltung gekoppelt und in einem Bremsmodus dazu ausgelegt ist, die Feldwicklungen (11) von der externen Stromversorgung zu trennen und die Energiespeichervorrichtung (20, 22) mit den Feldwicklungen (11) zu verbinden, um ein Bremsmoment in dem Motor (10) zu erzeugen, wobei die Steuervorrichtung (15) dazu ausgelegt ist, die Energiespeichervorrichtung (20, 22) selektiv mit der externen Stromversorgung zu verbinden, um die Energiespeichervorrichtung (20, 22) zu laden, wobei die Energiespeichervorrichtung (20, 22) einen oder mehrere Kondensatoren aufweist, **dadurch gekennzeichnet, dass** die Steuervorrichtung (15) dazu ausgelegt ist:

die Phase der Spannungswelle aus der externen Stromversorgung zu erfassen; und den einen oder die mehreren Kondensatoren der Energiespeichervorrichtung (20, 22) nur bei der Spannungswellenspitze mit der externen Stromversorgung zu verbinden.

2. Bremssystem gemäß Anspruch 1, wobei die Steuervorrichtung (15) dazu ausgelegt ist, die Energiespeichervorrichtung (20, 22) nur in einem Betriebsmodus, in dem die Feldwicklungen (11) während des normalen Betriebs des Motors (10) mit der externen Stromversorgung verbunden sind, selektiv mit der externen Stromversorgung zu verbinden.

3. Bremssystem gemäß Anspruch 1, wobei:

die Steuervorrichtung (15) eine Anordnung von Schaltern aufweist, die einen ersten Schalter zwischen den Feldwicklungen (11) und der externen Stromversorgung und einen zweiten Schalter zwischen der Energiespeichervorrichtung (20, 22) und den Feldwicklungen (11) aufweist; und
die Steuervorrichtung (15) dazu ausgelegt ist, in einem Betriebsmodus während des normalen Betriebs des Motors (10) den ersten Schalter zu aktivieren und den zweiten Schalter zu deaktivieren, und im Bremsmodus den ersten Schalter zu deaktivieren und den zweiten Schalter zu aktivieren.

4. Bremssystem gemäß Anspruch 3, wobei die Anordnung der Schalter TRIACs (42) sind.

5. Bremssystem gemäß Anspruch 1, bei dem der Motor (10) Ankerwicklungen (12) enthält, wobei das Bremssystem ferner eine zweite Energiespeichervorrichtung (22) aufweist, die über die Ankerwicklungen (12) verbunden ist, wobei die Steuervorrichtung (15) ferner dazu ausgelegt ist, sowohl die erste Energiespeichervorrichtung (20) als auch die zweite Energiespeichervorrichtung (22) mit den jeweiligen Feldwicklungen (11) und Ankerwicklungen (12) zu verbinden, um ein Bremsmoment im Motor (10) zu erzeugen.

6. Bremssystem gemäß Anspruch 1, bei dem der Motor (10) Bremswicklungen enthält, wobei das Bremssystem ferner eine zweite Energiespeichervorrichtung (22) aufweist, die über die Bremswicklungen verbunden ist, wobei die Steuervorrichtung (15) ferner dazu ausgelegt ist, sowohl die erste Energiespeichervorrichtung (20) als auch die zweite Energiespeichervorrichtung (22) mit den jeweiligen Feldwicklungen (11) und Bremswicklungen zu verbinden, um ein Bremsmoment im Motor (10) zu erzeugen.

7. Bremssystem gemäß Anspruch 6, wobei die Energiespeichervorrichtungen (20, 22) jeweils einen oder mehrere Kondensatoren aufweisen.

8. Bremssystem gemäß Anspruch 6, wobei die Steuervorrichtung (15) dazu ausgelegt ist:

in einem Betriebsmodus während des normalen Betriebs des Motors (10) nur die Feldwicklungen (11) mit der externen Stromversorgung verbinden; und
im Bremsmodus die Feldwicklungen (11) von der externen Stromversorgung zu trennen und die Feldwicklungen (11) und die Bremswicklungen mit einer entsprechenden Energiespeichervorrichtung (20, 22) zu verbinden.

9. Bremssystem gemäß Anspruch 1, wobei:

die Steuervorrichtung (15) einen Stromsensor (26) zum Erfassen der Stromwellenform aus der externen Stromversorgung aufweist; und
die Steuervorrichtung (15) dazu ausgelegt ist, bei einem Nulldurchgang der Stromwellenform die Feldwicklungen (11) zu trennen und die Energiespeichervorrichtung (20, 22) mit den Feldwicklungen (11) zu verbinden.

10. Verfahren zum Bremsen eines Universalmotors (10) mit Feldwicklungen (11) und Bremswicklungen, die durch eine externe Stromversorgung gespeist werden, umfassend:

Trennen der Feldwicklungen (11) von der externen Stromversorgung; und

Verbinden sowohl der Feldwicklungen (11) als auch der Bremswicklungen mit einer Energiespeichervorrichtung (20, 22), wobei eine Steuervorrichtung (15) selektiv eine Energiespeichervorrichtung (20, 22) mit der externen Stromversorgung verbindet, um die Energiespeichervorrichtung (20, 22) zu laden, wobei die Energiespeichervorrichtung (20, 22) einen oder mehrere Kondensatoren enthält, **dadurch gekennzeichnet, dass** die Steuervorrichtung (15) die Phase der Spannungswelle aus der externen Stromversorgung erfasst und den einen oder die mehreren Kondensatoren der Energiespeichervorrichtung (20, 22) nur bei der Spannungswellenspitze mit der externen Stromversorgung verbindet.

**11.** Verfahren gemäß Anspruch 10, ferner umfassend:

Überwachen der Stromwellenform der externen Stromversorgung; und
Verbinden sowohl der Feldwicklungen (11) als auch der Bremswicklungen bei einem Nulldurchgang der Stromwellenform mit der Energiespeichervorrichtung (20, 22) .

**Revendications**

**1.** Système de freinage pour un moteur universel (10) doté d'enroulements de champ (11), comprenant :

un circuit de commande de moteur connectant les enroulements de champ (11) à une alimentation électrique externe ;
un dispositif de stockage (20, 22) connecté au circuit de commande de moteur aux bornes des enroulements de champ (11) ; et
un contrôleur (15) couplé fonctionnellement au circuit de commande de moteur et configuré, dans un mode de freinage, pour déconnecter les enroulements de champ (11) de l'alimentation électrique externe et pour connecter le dispositif de stockage d'énergie (20, 22) aux enroulements de champ (11) afin de produire un couple de freinage dans le moteur (10), le contrôleur (15) étant configuré pour connecter sélectivement le dispositif de stockage d'énergie (20, 22) à l'alimentation électrique externe afin de charger le dispositif de stockage d'énergie (20, 22), le dispositif de stockage d'énergie (20, 22) comportant un ou plusieurs condensateurs, **caractérisé en ce que** le contrôleur (15) est configuré pour :

détecter la phase de l'onde de tension provenant de l'alimentation électrique externe ; et

connecter les un ou plusieurs condensateurs du dispositif de stockage d'énergie (20, 22) à l'alimentation électrique externe uniquement à la crête de l'onde de tension.

**2.** Système de freinage selon la revendication 1, dans lequel le contrôleur (15) est configuré pour connecter sélectivement le dispositif de stockage d'énergie (20, 22) à l'alimentation électrique externe uniquement dans un mode de marche dans lequel les enroulements de champ (11) sont connectés à l'alimentation électrique externe au cours d'un fonctionnement normal du moteur (10).

**3.** Système de freinage selon la revendication 1, dans lequel :

le contrôleur (15) comporte une matrice de commutateurs comportant un premier commutateur entre les enroulements de champ (11) et l'alimentation électrique externe et un deuxième commutateur entre le dispositif de stockage d'énergie (20, 22) et les enroulements de champ (11) ; et
le contrôleur (15) est configuré pour activer le premier commutateur et désactiver le deuxième commutateur dans un mode de marche au cours d'un fonctionnement normal du moteur (10), et pour désactiver le premier commutateur et activer le deuxième commutateur dans le mode de freinage.

**4.** Système de freinage selon la revendication 3, dans lequel la matrice de commutateurs consiste en des TRIAC (42) .

**5.** Système de freinage selon la revendication 1, dans lequel le moteur (10) comporte des enroulements d'induit (12), le système de freinage comprenant en outre un deuxième dispositif de stockage d'énergie (22) connecté aux bornes des enroulements d'induit (12), le contrôleur (15) étant configuré en outre pour connecter à la fois le premier dispositif de stockage d'énergie (20) et le deuxième dispositif de stockage d'énergie (22) aux enroulements de champ (11) et enroulements d'induit (12) respectifs afin de produire un couple de freinage dans le moteur (10).

**6.** Système de freinage selon la revendication 1, dans lequel le moteur (10) comporte des enroulements de frein, le système de freinage comprenant en outre un deuxième dispositif de stockage d'énergie (22) connecté aux bornes des enroulements de frein, le contrôleur (15) étant configuré en outre pour connecter à la fois le premier dispositif de stockage d'énergie (20) et le deuxième dispositif de stockage d'énergie (22) aux enroulements de champ (11) et enroulements de frein respectifs afin de produire un couple de freinage dans le moteur (10).

7. Système de freinage selon la revendication 6, dans lequel les dispositifs de stockage d'énergie (20, 22) comportent chacun un ou plusieurs condensateurs.

8. Système de freinage selon la revendication 6, dans lequel le contrôleur (15) est configuré pour :

   connecter uniquement les enroulements de champ (11) à l'alimentation électrique externe dans un mode de marche au cours d'un fonctionnement normal du moteur (10) ; et
   dans le mode de freinage, déconnecter les enroulements de frein (11) de l'alimentation électrique externe et connecter les enroulements de champ (11) et enroulements de frein à un dispositif de stockage d'énergie (20, 22) respectif.

9. Système de freinage selon la revendication 1, dans lequel :

   le contrôleur (15) comporte un détecteur de courant (26) destiné à détecter la forme d'onde de courant provenant de l'alimentation électrique externe ; et
   le contrôleur (15) est configuré pour déconnecter les enroulements de champ (11) et connecter le dispositif de stockage d'énergie (20, 22) aux enroulements de champ (11) à un passage par zéro de la forme d'onde de courant.

10. Procédé de freinage d'un moteur universel (10) doté d'enroulements de champ (11) et d'enroulements de frein alimentés par une alimentation électrique externe, comprenant :

    la déconnexion des enroulements de champ (11) de l'alimentation électrique externe ; et
    la connexion à la fois des enroulements de champ (11) et des enroulements de frein à un dispositif de stockage d'énergie (20, 22), un contrôleur (15) connectant sélectivement un dispositif de stockage d'énergie (20, 22) à l'alimentation électrique externe afin de charger le dispositif de stockage d'énergie (20, 22), le dispositif de stockage d'énergie (20, 22) comportant un ou plusieurs condensateurs, **caractérisé en ce que** le contrôleur (15) détecte la phase de l'onde de tension provenant de l'alimentation électrique externe ; et connecte les un ou plusieurs condensateurs du dispositif de stockage d'énergie (20, 22) à l'alimentation électrique externe uniquement à la crête de l'onde de tension.

11. Procédé selon la revendication 10, comprenant en outre :

la surveillance de la forme d'onde de courant de l'alimentation électrique externe ; et
la connexion à la fois des enroulements de champ (11) et des enroulements de frein au dispositif de stockage d'énergie (20, 22) à un passage par zéro de la forme d'onde de courant.

**FIG. 1**

**FIG. 2**

(TOP)

BACK VIEW

DOUBLE COPPER
(IN WHITE SLEEVE)

11

DOUBLE
COPPER

BLACK

13

COPPER

BLACK

BLACK
BLACK

BRUSH

WHITE

BRUSH

WHITE

FEEDBACK
[BLACK (WHITE)]

GRAY

BROWN

CONTROLLER

BLACK

BLUE

P

FIG. 3

FIG. 4

FIG. 5

*FIG. 6*

FIG. 7

FIG. 8

17

FIG. 9

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2509212 A2